# EUROPÄISCHE PATENTSCHRIFT

(11) **EP 2 139 706 B1**
(45) Veröffentlichungstag und Bekanntmachung des Hinweises auf die Patenterteilung: **15.02.2012**
(21) Anmeldenummer: 08716595.7
(22) Anmeldetag: 18.03.2008
(51) Int. Cl.: B60G 13/00, B60G 15/07, F16B 7/02, F16F 9/32, F16F 9/54

(54) **SCHWINGUNGSDÄMPFER**
VIBRATION DAMPER
AMORTISSEUR DE VIBRATIONS

(30) Priorität: 29.03.2007 DE 102007015590
(43) Veröffentlichungstag der Anmeldung: 06.01.2010
(73) Patentinhaber: ZF Friedrichshafen AG, 88038 Friedrichshafen (DE)
(72) Erfinder: HANDKE, Günther, 97502 Euerbach (DE); SCHULER, Manfred, 97456 Dittelbrunn/Hambach (DE); STRETZ, Klaus, 97437 Hassfurt (DE); RENN, Josef, 97337 Dettelbach (DE)
(86) Internationale Anmeldenummer: PCT/EP2008/002135
(87) Internationale Veröffentlichungsnummer: WO 2008/119462

(56) Entgegenhaltungen:
- EP-A- 1 729 017
- DE-A1- 3 213 657
- DE-U1- 8 232 408
- GB-A- 2 309 947

## Beschreibung

### Technisches Gebiet

Die Erfindung betrifft einen Zylinder eines Schwingungsdämpfers gemäß dem Oberbegriff von Patentanspruch 1.

### Stand der Technik

Aus der GB 2 309 947 A1, z. B. Fig. 6, ist ein Schwingungsdämpfer mit einem Zylinderrohr bekannt, das einen konisch geformten Endbereich aufweist, auf dem ein Radträger mit einem Innenkonus mittels einer Spannschraube fixierbar ist.

Die gattungsbildende DE 82 32 408 U1 zeigt einen Schwingungsdämpfer mit einem Radträger, die ebenfalls über eine Konusverbindung verspannt sind. Zusätzlich kommt eine Verdrehsicherung zur Anwendung, die eine Lageorientierung des Radträgers in Umfangsrichtung gewährleistet.

Ein generelles Problem einer Konusverbindung besteht darin, dass schon geringste Durchmesserabweichungen zu einer deutlich axialen Verschiebung des Radträgers auf dem Zylinder führen, da der Konuswinkel vergleichsweise klein ausgeführt wird. Damit können definierte Einbaumaße des Schwingungsdämpfers nicht eingehalten werden.

Eine auf dem ersten Blick naheliegende Lösung könnte darin gesehen werden, dass man einen einfachen Axialanschlag verwendet, wie er beispielsweise in der DE 198 15 215 A1 offenbart ist. Das Problem besteht jedoch darin, dass sich der Axialanschlag und der Konus nicht optimal zueinander ausrichten lassen, so dass der Axialanschlag überhaupt nicht wirksam ist oder die Konusverbindung keine Klemmkräfte überträgt, da der Radträger schon am Axialanschlag anliegt.

### Darstellung der Erfindung

Aufgabe der vorliegenden Erfindung ist es, eine Konusverbindung an einem Schwingungsdämpfer zu realisieren, bei der das aus dem Stand der Technik bekannte axiale Positionierungsproblem behoben ist.

Erfindungsgemäß wird die Aufgabe dadurch gelöst, dass die Konusverbindung in Umfangsrichtung mindestens zwei Bereiche mit einem kleineren und einem größeren Konuswinkel aufweist.

Der kleinere Konuswinkel übernimmt die Funktion der Reibschlussverbindung und der größere Konuswinkel dient als Anschlagbegrenzung. Durch die Anordnung der unterschiedlichen Konuswinkel in Umfangsrichtung erhält man auch eine Verdrehsicherung für das zu fixierende Bauteil.

Um eine möglichst optimale wirksame Führungslänge des zu fixierenden Bauteils auf dem Zylinder zu erreichen ist vorgesehen, dass mindestens eines der beiden zu verbindenden Bauteile einen konkaven Konusverlauf aufweist.

Zur Steigerung der Verdrehfestigkeit kann der Befestigungskonus im Querschnitt symmetrisch zu einer Querachse ausgeführt sein.

Alternativ kann der Zylinder mindestens zwei axial in Reihe angeordnete Konusbereiche aufweisen, die mit zwei Innenkonusflächen des zu fixierenden Bauteils zusammenwirken.

Im Hinblick auf eine möglichst spielfreie und winkelgetreue Befestigung sind die Winkel der Innenkonusflächen des zu fixierenden Bauteils und die Konusbereiche des Zylinders geringfügig unterschiedlich ausgeführt. So weichen die Winkel der Innenkonusflächen des zu fixierenden Bauteils in dem Sinn von den Konusbereichen des Zylinders ab, dass ein erster Innenkonuswinkel größer ist als der damit zusammenwirkende Konuswinkel im Konusbereich des Zylinders und ein zweiter Innenkonuswinkel kleiner ist als ein damit zusammenwirkender zweiter Konuswinkel im Konusbereich des Zylinders, so dass die maximal beabstandeten Ränder der Innenkonusflächen auf den Konusbereichen des Zylinders zur Anlage kommen.

Des Weiteren besteht die Möglichkeit, dass die Innenkonusflächen in Richtung der Konusbereiche ballig ausgeführt sind.

Um eine Hinterschneidung, d. h. eine Durchmesserweiterung zwischen den Innenkonusflächen zu vermeiden, sind die Radien der Innenkonusflächen derart gewählt, dass eine zur balligen Innenkonusflächen ausgerichtete Tangente durch eine am Übergang von der einen auf die andere ballige Innenkonusfläche gebildete Berührlinie und parallel zur Mittelachse verläuft.

Im Hinblick auf eine möglichst einfache Herstellung der Innenkonusfläche erstreckt sich die ballige Innenkonusfläche über beide Konusflächen. Durch einen entsprechend angeschliffenen Bohrer oder Profilfräser kann der Radträger sehr leicht hergestellt werden.

Unabhängig von der Ausführung der Konusverbindung kann der Zylinder mit einer Markierung versehen ist, die die bei der Montage eingestellte Lage des Anbauteils zum Zylinder dokumentiert.

Eine axiale Abzugsicherung kann man derart ausführen, dass sich der Zylinder axial durch zu fixierende Bauteil erstreckt und ein überstehender Rand des Zylinders radial deformierbar ist.

Im Hinblick auf eine möglichst große Haltekraft der Konusverbindung ist der Tangens des kleineren Konuswinkels kleiner als der Reibungskoeffizient einer lackierten metallischen Oberflächenpaarung.

### Kurze Beschreibung der Zeichnungen

Anhand der folgenden Figurenbeschreibung soll die Erfindung näher erläutert werden.

Es zeigt:
- **Fig. 1**: Zylinder mit Radträger
- **Fig. 2**: Vorderansicht des Zylinders von Fig. 1
- **Fig. 3**: Räumliche Darstellung des Zylinders von Fig. 1
- **Fig. 4**: Seitenansicht zum Zylinder nach Fig. 1
- **Fig. 5**: Zylinder mit symmetrischer Ausgestaltung der Konusflächen zu einer Querachse
- **Fig. 6**: Zylinder und Radträger mit zwei axial in Reihe angeordneten Konusbereichen
- **Fig. 7**: Weiterentwicklung der Konstruktion mit balligen Innenkonusflächen
- **Fig. 8 u. 9**: Zylinder nach Fig. 6 mit einer balligen Innenkonusfläche

### Bester Weg zur Ausführung der Erfindung

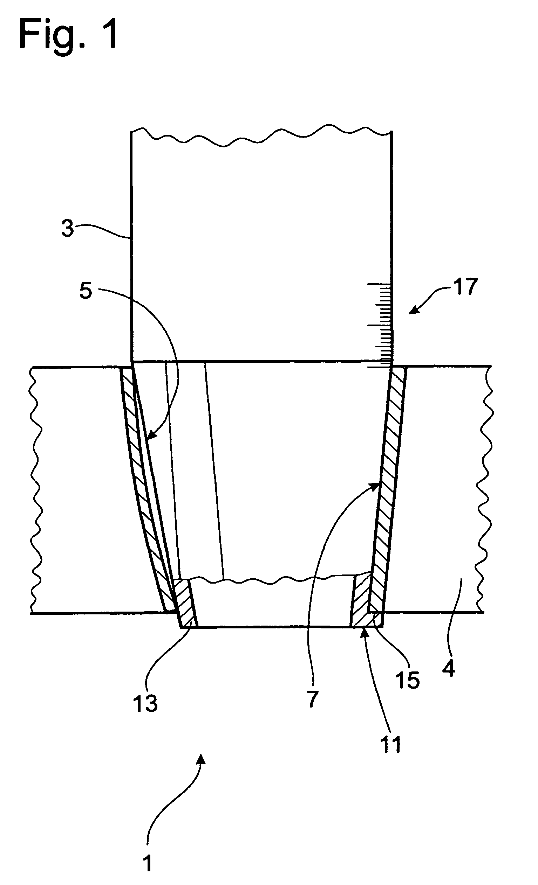

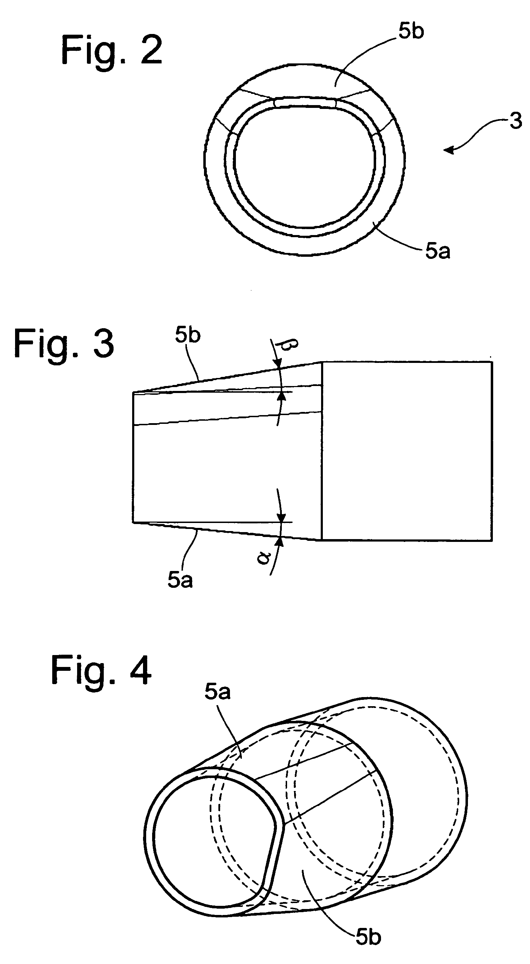

Die Figur 1 zeigt einen Teilausschnitt von einem Schwingungsdämpfer 1, an dessen Zylinder 3 ein Radträger 4 als Anbauteil fixiert ist. Wie aus der Zusammenschau der Fig. 1 bis 4 zu erkennen ist, verfügt der Zylinder 3 über einen Befestigungskonus 5, der mit einer Innenkonusfläche 7 des Radträgers 4 in Axialrichtung eine kraftschlüssige Verbindung eingeht. Die Fig. 2 und 3 verdeutlichen am Zylinder 3 bzw. dem Befestigungskonus, dass die gesamte Konusverbindung in Umfangsrichtung mindestens zwei Bereiche 5a; 5b mit unterschiedlich großen Konuswinkeln α; β aufweist. Ein größerer Umfangsbereich 5a ist mit einem kleineren Konuswinkel α ausgeführt als der zweite Umfangsbereich 5b. Durch die unterschiedlichen Konuswinkel am Befestigungskonus und am Innenkonus ergibt sich eine formschlüssige Verdrehsicherungsverbindung zwischen dem Radträger und dem Zylinder.

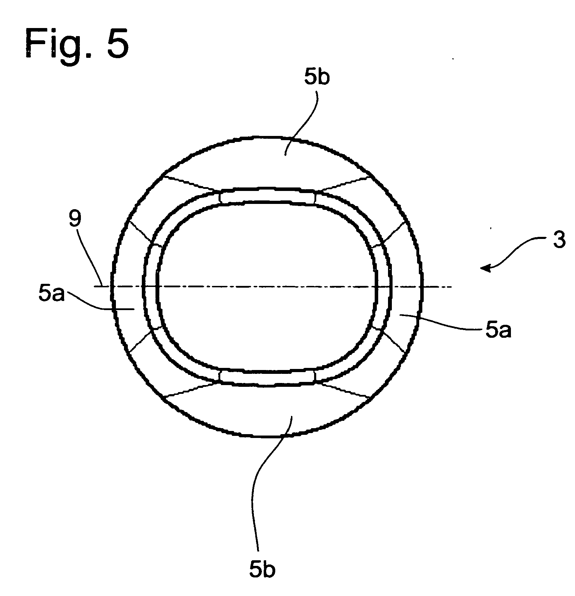

Ergänzend ist noch die Fig. 5 zu nennen, die einen Befestigungskonus 5 mit einem im Querschnitt symmetrisch zu einer Querachse 9 aufweist, d. h. dass gegenüberliegende Umfangsbereiche 5a; 5b mit einem gleichen Konuswinkel a; β ausgeführt sind.

Erste Versuche haben gezeigt, dass für den größeren Umfangsbereich 5a ein Konuswinkel a von 3 bis 6° und für den kleineren Umfangsbereich 5b ein Konuswinkel β von 7 -10° günstig sind. Dabei ist vorgesehen, dass der größere Umfangsbereich 5a mit dem kleineren Konuswinkel α die tragende Verbindung zwischen dem Zylinder 3 und dem Radträger bildet. Der größere Konuswinkel β sorgt für die axiale Positionierung und für die Verdrehsicherung. Durch eine sinnvolle Kombination der Konuswinkel α; β und deren Maßtoleranzen wird eine Doppelpassung, d. h. maßliche Überbestimmung der gesamten Konusverbindung, so dass keine kraftschlüssige Verbindung am großen Umfangsbereich 5a vorliegen würde, verhindert.

Der kleinere Konuswinkel a soll einen Tangens kleiner dem Reibungskoeffizienten einer lackierten metallischen Oberflächenpaarung aufweisen, um eine festsitzenden Konusverbindung zu erreichen.

In der Fig. 1 ist in der linken Schnitthälfte zusätzlich dargestellt, dass an mindestens einem der beiden zu verbindenden Bauteile, in diesem Fall der Radträger 4, ein konkaver Konturenverlauf ausgeführt ist. Damit werden eventuelle maßliche Abweichungen im Durchmesser und/oder Konuswinkel ausgeglichen, so dass eine möglichst große Führungslänge des Radträgers 4 auf dem Zylinder 3 vorliegt.

Bei der Montage wird der Radträger 4 axial auf den Zylinder 3 aufgepresst. Als axiale Abzugssicherung 11 kann sich der Zylinder 3 durch den Radträger 4 als das zu fixierende Bauteil erstrecken und ein überstehender Rand 13 des Zylinders 3 lässt sich nach radial außen deformieren. Der Rand 13 oder ein Teilabschnitt des Randes 13 liegt dann an einer Stirnfläche 15 des Radträgers 4 an.

Als weiteres Merkmal ist in der Fig. 1 eine Markierung 17 dargestellt, die eine bei der Montage eingestellte axiale Lage des Radträgers 4 als zu fixierendes Bauteil auf dem Zylinder 3 dokumentiert. Wenn der Schwingungsdämpfer aufgrund einer extremen Einfederungsbewegung über ein vorgesehenes Maß belastet wird, dann kann u. U. der Zylinder 3 stärker in den Radträger 4 eingepresst werden. Diese axiale Verschiebung lässt sich an der Markierung feststellen, so dass bei einer Fahrzeuginspektion die Überbeanspruchung des Schwingungsdämpfers erkennbar ist.

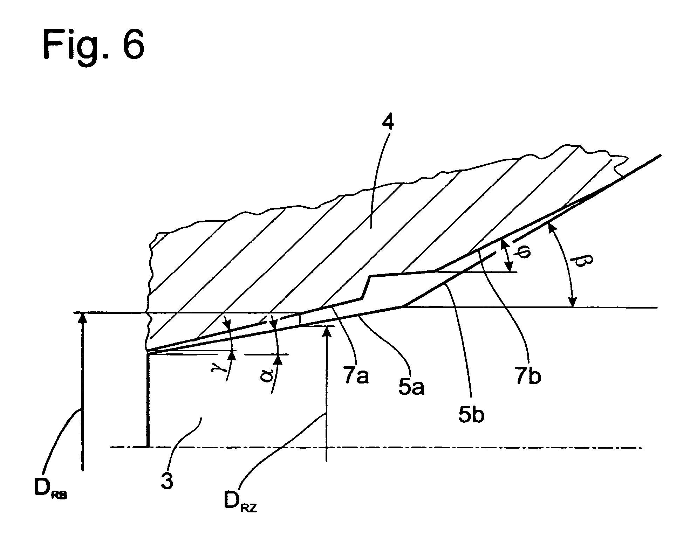

Die Fig. 6 zeigt einen Zylinder mit mindestens zwei axial in Reihe angeordneten Konusbereichen 5a; 5b, die einen unterschiedlichen Konuswinkel ϕ;β aufweisen. Auch der Radträger 4 verfügt über zwei in Reihe angeordneten Innenkonusflächen 7a; 7b mit unterschiedlichen Konuswinkeln γ, ϕ, wobei die Konusbereiche 5a; 7a am Zylinder 3 und am Radträger 4 mit dem kleineren Konuswinkel die kraftschlüssige Konusverbindung bilden und die Konusbereiche 5b; 7b mit dem größeren Konuswinkel die axiale Position des Radträgers 4 zum Zylinder 3 in einem engeren Toleranzbereich halten.

Die axial in Überdeckung stehenden Konuswinkel am Radträger und am Zylinder sind mit einer definierten Abweichung ausgeführt. Die Winkel γ, ϕ der Innenkonusflächen /a; 7b des Radträgers 4 weichen bezogen auf einen definierten Durchmesser D_{RB} am Radträger und D_{RZ} am Zylinder in dem Sinn von den Konuswinkeln ϕ;β Konusbereichen 5a; 5b des Zylinders ab, dass ein erster Innenkonuswinkel γ größer ist als der damit zusammenwirkende erste Konuswinkel ϕ im ersten Konusbereich 5a des Zylinders und ein zweiter Innenkonuswinkel ϕ kleiner ist als der zweite Konuswinkel β im Konusbereich 5b des Zylinders 3, so dass die maximal beabstandeten Ränder der Innenkonusflächen 7a; 7b auf den Konusbereichen 5a; 5b des Zylinders 3 zur Anlage kommen. Damit wird eine spielfreie und damit klapperfreie Verbindung zwischen dem Radträger 4 und dem Zylinder 3 gewährleistet.

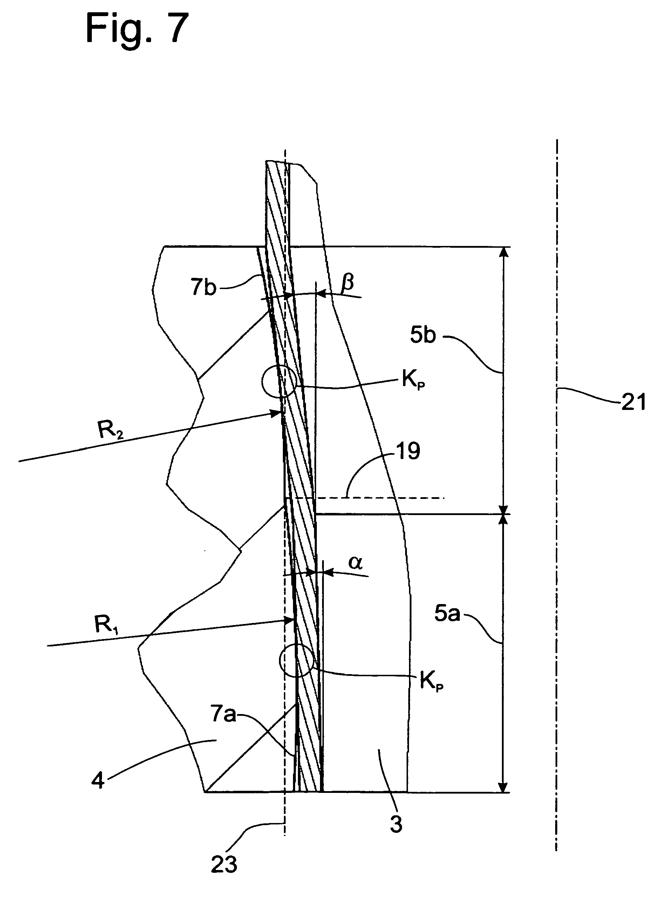

Die Fig. 7 zeigt eine Variante, die auf der Fig. 6 aufbaut. Die Innenkonusflächen 7a, 7b des Radträgers 4 sind in Richtung der Konusfläche 5a; 5b des Zylinders 3 ballig ausgeführt und verfügen über unterschiedliche Krümmungsradien R₁; R₂ . Die tragenden Kontaktpunkte K_{P} der Innenkonusflächen 7a; 7b sind ringförmig markiert. Am Übergang zwischen den beiden balligen Innenkonusflächen 7a; 7b bildet sich eine Berührlinie 19. Die Radien der Innenkonusflächen 7a, 7b sind derart gewählt, dass eine durch die Berührlinie zur Innenkonusfläche 7b ausgerichtete und zur Mittelachse 21 des Zylinders 3 parallele Tangente 23 verläuft, so dass im gesamten Verlauf beider Innenkonusflächen 7a; 7b keine Hinterschneidung vorliegt.

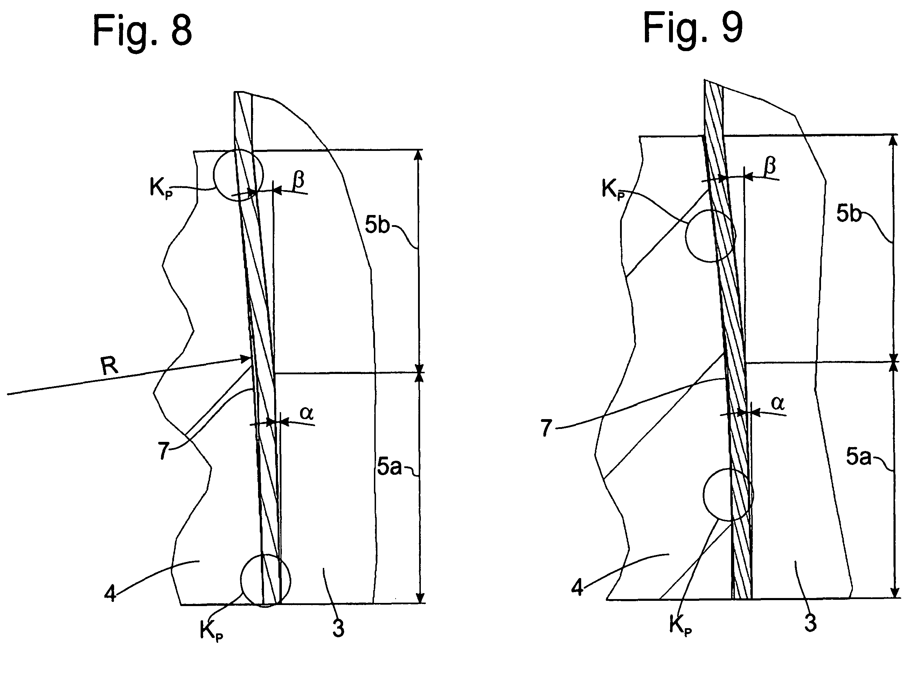

Die Figurengruppe 8 und 9 beschreibt einen Konusverbindung, mit zwei in Reihe angeordneten Konusbereichen 5a; 5b mit unterschiedlichen Winkeln α; β. In der Fig. 8 sind die Winkel um 0,5° unter dem Nennmaß von a = 5° und β = 7° maßstabsgerecht dargestellt. Die ballige Innenkonusflächen ist in Richtung der Konusflächen 5a; 5b ausgerichtet. Der Radius wurde derart gewählt, dass die Kontaktpunkte K_{P} zwischen der Innenkonusfläche 7 und den Konusflächen 5a; 5b unmittelbar im äußeren Grenzbereich der Konusverbindung liegen.

In der Fig. 9 wurden die Winkel α; β um 0,5° vergrößert dargestellt, hingegen der Radius R der Innenkonusfläche 7 beibehalten. Die Kontaktpunkte innerhalb der Konusverbindung liegen in einem ausreichend großen axialen Abstand, so dass kein Schiefstand und Wackeln auftreten kann. Wie man sieht, ergibt sich praktisch kein axialer Höhenversatz des Zylinders 3 zum Radträger 4.

## Patentansprüche

1. Zylinder (3) eines Schwingungsdämpfers (1) mit einem Befestigungskonus (5, 5a, 5b), auf dem ein Bauteil (4) mit einer Innenkonusfläche (7) fixierbar ist, wobei zwischen dem Zylinder und dem Bauteil eine formschlüssige Verdrehsicherungsverbindung wirksam ist,
**dadurch gekennzeichnet,**
**dass** die Konusverbindung in Umfangsrichtung mindestens zwei Bereiche (5a; 5b) mit einem kleineren und einem größeren Konuswinkel (α; β; γ, ϕ) aufweist.

2. Zylinder nach Anspruch 1,
**dadurch gekennzeichnet,**
**dass** mindestens eines der beiden zu verbindenden Bauteile (3; 4) einen Konus (7a) mit einem konkaven Konusverlauf aufweist.

3. Zylinder nach Anspruch, 1
**dadurch gekennzeichnet,**
**dass** der Befestigungskonus (5a; 5b) im Querschnitt symmetrisch zu einer Querachse (9) ausgeführt ist.

4. Zylinder nach Anspruch 1,
**dadurch gekennzeichnet,**
**dass** der Zylinder (3) mindestens zwei axial in Reihe angeordnete Konusbereiche (5a; 5b) aufweist, die mit zwei Innenkonusflächen (7; 7a; 7b) des zu fixierenden Bauteils (4) zusammenwirken.

5. Zylinder nach Anspruch 4,
**dadurch gekennzeichnet,**
**dass** die Winkel (γ, ϕ) der Innenkonusflächen (7a; 7b) des zu fixierenden Bauteils (4) in dem Sinn von den Konuswinkeln (α; β) in den Konusbereichen (5a; 5b) des Zylinders (3) abweichen, dass ein erster Innenkonuswinkel (γ) größer ist als der damit zusammenwirkende Konuswinkel (α) im Konusbereich (5a) des Zylinders (3) und ein zweiter Innenkonuswinkel (ϕ) kleiner ist als ein damit zusammenwirkender zweiter Konuswinkel (β) im Konusbereich (5b) des Zylinders (3), so dass die maximal beabstandeten Ränder der Innenkonusflächen (7a; 7b) auf den Konusbereichen (5a; 5b) des Zylinders (3) zur Anlage kommen.

6. Zylinder nach Anspruch 4,
**dadurch gekennzeichnet,**
**dass** die Innenkonusflächen (7; 7a; 7b) in Richtung der Konusbereiche (5a; 5b) ballig ausgeführt sind.

7. Zylinder nach Anspruch 6,
**dadurch gekennzeichnet,**
**dass** durch eine eine der zu balligen Innenkonusflächen (7b) ausgerichtete Tangente (23) durch eine am Übergang von der einen auf die andere ballige Innenkonusfläche (7a; 7b) gebildete Berührlinie (19) und parallel zur Mittelachse (21) verläuft.

8. Zylinder nach Anspruch 6,
**dadurch gekennzeichnet,**
**dass** sich die ballige Innenkonusfläche (7) über beide Konusflächen (5a; 5b) erstreckt.

9. Zylinder nach einem der Ansprüche 1 bis 8,
**dadurch gekennzeichnet,**
**dass** der Zylinder (3) mit einer Markierung (17) versehen ist, die die bei der Montage eingestellte Lage des Anbauteils (4) zum Zylinder (3) dokumentiert.

10. Zylinder nach einem der Ansprüche 1 bis 9 ,
**dadurch gekennzeichnet,**
**dass** sich der Zylinder (3) axial durch zu fixierende Bauteil erstreckt und ein überstehender Rand (13) des Zylinders (3) radial deformierbar ist und eine axiale Abzugssicherung (11) bildet.

11. Zylinder nach einem der Ansprüche 1 bis 10,
**dadurch gekennzeichnet,**
**dass** der Tangens des kleineren Konuswinkels (α) kleiner ist als der Reibungskoeffizient einer lackierten metallischen Oberflächenpaarung.

## Claims

1. Cylinder (3) of a vibration damper (1) having a fastening cone (5, 5a, 5b), on which a component (4) can be fixed by way of an inner cone face (7), a positively locking anti-rotation safeguard connection being active between the cylinder and the component, **characterized in that**, in the circumferential direction, the conical connection has at least two regions (5a; 5b) with a smaller and a greater cone angle (α; β; γ, ϕ).

2. Cylinder according to Claim 1, **characterized in that** at least one of the two components (3; 4) to be connected has a cone (7a) with a concave cone profile.

3. Cylinder according to Claim 1, **characterized in that** the fastening cone (5a; 5b) is of symmetrical configuration in cross section with respect to a transverse axis (9).

4. Cylinder according to Claim 1, **characterized in that** the cylinder (3) has at least two cone regions (5a; 5b) which are arranged axially in series and interact with two inner cone faces (7; 7a; 7b) of the component (4) to be fixed.

5. Cylinder according to Claim 4, **characterized in that** the angles (γ, ϕ) of the inner cone faces (7a; 7b) of the component (4) to be fixed deviate in direction from the cone angles (α; β) in the cone regions (5a; 5b) of the cylinder (3), **in that** a first inner cone angle (γ) is greater than the cone angle (α) which interacts with it in the cone region (5a) of the cylinder (3) and a second inner cone angle (ϕ) is smaller than a second cone angle (β) which interacts with it in the cone region (5b) of the cylinder (3), with the result that the maximally spaced apart edges of the inner cone faces (7a; 7b) come into contact on the cone regions (5a; 5b) of the cylinder (3).

6. Cylinder according to Claim 4, **characterized in that** the inner cone faces (7; 7a; 7b) are of convex configuration in the direction of the cone regions (5a; 5b).

7. Cylinder according to Claim 6, **characterized in that** a tangent (23) which is oriented towards convex inner cone faces (7b) extends through a contact line (19), which is formed at the transition from one to the other convex inner cone face (7a; 7b), and parallel to the centre axis (21).

8. Cylinder according to Claim 6, **characterized in that** the convex inner cone face (7) extends over both cone faces (5a; 5b) .

9. Cylinder according to one of Claims 1 to 8, **characterized in that** the cylinder (3) is provided with a marking (17) which documents the position of the attachment component (4) with respect to the cylinder (3), which position is set during the installation.

10. Cylinder according to one of Claims 1 to 9, **characterized in that** the cylinder (3) extends axially through the component to be fixed, and a projecting edge (13) of the cylinder (3) can be deformed radially and forms an axial withdrawal safeguard (11).

11. Cylinder according to one of Claims 1 to 10, **characterized in that** the tangent of the smaller cone angle (α) is smaller than the coefficient of friction of a painted metallic surface pairing.

## Revendications

1. Cylindre (3) d'un amortisseur de vibrations (1), comprenant un cône de fixation (5, 5a, 5b) sur lequel peut être fixé un composant (4) avec une surface conique interne (7), une liaison de fixation en rotation par engagement par correspondance géométrique agissant entre le cylindre et le composant,
**caractérisé en ce que**
la liaison conique présente dans la direction périphérique au moins deux régions (5a ; 5b) avec un angle de conicité plus petit et un angle de conicité plus grand (α ; β ; γ ; ϕ).

2. Cylindre selon la revendication 1,
**caractérisé en ce**
**qu'**au moins l'un des deux composants (3 ; 4) à relier présente un cône (7a) avec une allure conique concave.

3. Cylindre selon la revendication 1,
**caractérisé en ce que**
le cône de fixation (5a ; 5b) est réalisé en section transversale de manière symétrique par rapport à un axe transversal (9).

4. Cylindre selon la revendication 1,
**caractérisé en ce que**
le cylindre (3) présente au moins deux régions coniques (5a ; 5b) disposées axialement en rangée, qui coopèrent avec deux surfaces coniques internes (7 ; 7a ; 7b) du composant (4) à fixer.

5. Cylindre selon la revendication 4,
**caractérisé en ce que**
les angles (γ, ϕ) des surfaces coniques internes (7a ; 7b) du composant à fixer (4) s'écartent dans le sens des angles de conicité (α ; β) dans les régions coniques (5a ; 5b) du cylindre (3), **en ce qu'**un premier angle de conicité interne (γ) est supérieur à l'angle de conicité (α) coopérant avec lui dans la région conique (5a) du cylindre (3), et un deuxième angle de conicité interne (ϕ) est inférieur à un deuxième angle de conicité (β) coopérant avec lui dans la région conique (5b) du cylindre (3), de sorte que les bords espacés au maximum des surfaces coniques internes (7a ; 7b) viennent en appui sur les régions coniques (5a ; 5b) du cylindre (3).

6. Cylindre selon la revendication 4,
**caractérisé en ce que**
les surfaces coniques internes (7 ; 7a ; 7b) sont réalisées sous forme bombée dans la direction des régions coniques (5a ; 5b).

7. Cylindre selon la revendication 6,
**caractérisé en ce**
**qu'**une tangente (23) orientée vers les surfaces coniques internes bombées (7b) s'étend à travers une ligne de contact (19) formée par l'une et par l'autre surface conique interne bombée (7a ; 7b) et parallèlement à l'axe médian (21).

8. Cylindre selon la revendication 6,
**caractérisé en ce que**
la surface conique interne bombée (7) s'étend sur les deux surfaces coniques (5a ; 5b).

9. Cylindre selon l'une quelconque des revendications 1 à 8,
**caractérisé en ce que**
le cylindre (3) est pourvu d'un marquage (17), qui documente la position ajustée lors du montage de la partie rapportée (4) par rapport au cylindre (3) .

10. Cylindre selon l'une quelconque des revendications 1 à 9,
**caractérisé en ce que**
le cylindre (3) s'étend axialement à travers le composant à fixer, et un bord saillant (13) du cylindre (3) peut être déformé radialement et forme une fixation axiale contre le retrait (11).

11. Cylindre selon l'une quelconque des revendications 1 à 10,
**caractérisé en ce que**
la tangente du plus petit angle de conicité (α) est inférieure au coefficient de friction d'une paire de surfaces métalliques laquées.
